# EUROPEAN PATENT APPLICATION

(11) **EP 4 684 956 A1**
(43) Date of publication of application: **28.01.2026**
(21) Application number: 24190137.0
(22) Date of filing: 22.07.2024
(51) Int. Cl.: B32B 5/02, B32B 27/12, B32B 27/20, B32B 27/36, B60N 3/04, G10K 11/168

(54) **SUSTAINABLE AUTOMOTIVE FLOORING SYSTEM WITH ACOUSTIC BARRIER**

(71) Applicant: Autoneum Management AG, 8406 Winterthur (CH)
(72) Inventor: Berger, Yann, 5355 Aadorf (CH)

(57) **Abstract**

Automotive flooring system formed in a 3-dimensional shape comprising at least a carpet surface layer, a acoustic barrier, and a decoupling layer, all layers laminated face to face to adjacent layer or layers whereby all components of the flooring comprise of at least 95% terephthalate-based polymers or copolymers by weight of the full part.

## Description

### Technical Field

The present invention relates to a sustainable flooring system with a acoustic barrier, and a method of producing such sustainable flooring system.

### Background

Automotive flooring parts or systems are multilayer products including different materials to meet all requirements of these complex parts, including but not restricted to acoustic requirements, mechanical requirements, like stiffness, and process requirements in particular the ability of the material to maintain integrity during the step of moulding in a complex three-dimensional shape to fit within the dedicated area of the vehicle.

The sources of noise in a vehicle include, among others, power train, driveline, tire contact patch (excited by the road surface), brakes, and wind. The noise generated by all these sources inside the vehicle's cabin covers a rather large frequency range that, for normal diesel and petrol vehicles, can go up to 6.3 kHz. Above this frequency, the acoustical power radiated by the noise sources in a vehicle is generally negligible.

It is known to integrate a "mass-spring" system into vehicle flooring parts. Herein, the mass element is formed by a layer of a relatively high-density impervious material, which is termed as "acoustic barrier" or "acoustic barrier". The spring element is formed by a layer of relatively low-density material like a non-compressed felt, fleece or foam. This combination of a mass-spring system when applied on a panel of the vehicle insulates the noise generated by the panel due to noise coming from outside the vehicle, like rolling noise of the tires, or any moving appliances like motors or gearing systems.

The thickness of the noise insulation materials used is normally predetermined by the vehicle manufacturer. If this is the case, and in particular where the insulating layer has a substantially uniform thickness, changes in the resonance frequency can be carried out by increasing the mass, either by increasing the density of the material and or the area weight of the acoustic barrier. Hence the function of the insulator is highly dependent on the area weight and density of the acoustic barrier. Typically, the insulator quality increases with increasing weight of the acoustic barrier. However, since the weight has a direct impact on the amount of fuel used during driving, the weight of the acoustic barrier is to be restricted since less weight is an economic and ecological requirement. Thus, a trend towards lower weights for the acoustic barrier for classical mass-spring systems can be observed.

The acoustic barrier, i.e. the impervious acoustic barrier, can be made of highly filled dense materials, which may include materials comprising ethylene vinyl acetate (EVA) copolymer, high density polyethylene, low density polyethylene, linear low-density polyethylene, polypropylene, thermoplastic elastomer or rubber, polyvinyl chloride, or any combinations thereof.

Standard polyolefin based acoustic barrier, or acoustic barrier materials are not really stiff, but flexible and have elastomeric properties. For applications, in need for a higher stiffness polypropylene is added but will render the material more brittle and with reduced elongation properties making the moulding process more difficult. Hence it is difficult to achieve required stiffness and maintain the integrity of the material after moulding.

Here today the trend is going to more sustainable products with material combinations that are more easily recyclable to same or higher-level products. As the thermoplastic elastomeric layers are combined with felt based materials, films, foils or foams it becomes a multilayer multi-material automotive part, that is difficult to recycle or to take apart into the various materials used. Polyester yarns and fibers are widely used in automotive parts. Hence, they are difficult to upcycle in a high-quality product again, while recycling companies are not willing to take them back because of the mixed plastic nature. And even if the elastomeric layer may be separated of the other layers, the amount of inert filler is so high that there is not enough valuable material left over to justify any reclaiming, recycling, or even thermal recycling.

Although the industry is aiming at achieving mono-material multilayer products, simple replacement of the material bases while maintaining the requirements is difficult and not done for certain layers, including the acoustic barrier. It is there for the aim of providing a multilayer flooring system with a better recycling prospect, hence being more sustainable.

### Summary

The object is achieved by an automotive flooring system formed in a 3-dimensional shape comprising at least a carpet surface layer, a acoustic barrier, and a decoupling layer, all layers laminated face to face to adjacent layer or layers according to main claim 1. In particular, by a multilayer flooring system, whereby all components of the flooring system are thermoplastic material, preferably terephthalate-based polymers, or copolymers.

By providing an automotive flooring system with all thermoplastic components, not just the main components, as terephthalate-based materials the possibility to upcycle the production waste as well as the end-of-life flooring system is feasible. For instance, the full part or cut off waste may be shredded, washed, and reprocessed for spinning staple fibers, that may be used again in for instance the decoupler of a similar flooring part. An alternative option may be to reuse waste directly into the automotive part, for instance as part of the matrix material.

Surprisingly, it is possible to create an acoustic barrier based on terephthalate-based material, obtaining already a density that may be used for the lighter area weight used today.

The acoustic barrier comprises a matrix of terephthalate-based material. Preferably matrix comprises at least a first copolymer of terephthalate-based material. The first copolymer is at least 40% by weight of the acoustic barrier, preferably at least 50% by weight of the acoustic barrier. Preferably the first copolymer of the mass matrix has a melting temperature in the range of 140 to 160°C as measured with DSC. As the first copolymer of the matrix for the acoustic barrier a copolyester thermoplastic elastomers (TPEE) may be used.

Surprisingly, by using a copolymer of terephthalate-based material according to the invention, it is possible to obtain a mouldable layer that may function as an acoustic barrier in an acoustic mass spring system. Hence, the layer is able to replace the classic polyolefin-based material currently used for such mass or acoustic barriers, with comparable results for acoustic insulation, while the material is also mouldable in a 3-D shape without tearing in the high stretched regions or crumbling.

The mass matrix may further comprise a second copolymer of terephthalate-based material, to finetune the overall performance of the acoustic barrier, and or to optimise the production process. Preferably the second copolymer of the mass matrix has a melting temperature in the range of 130 to 155°C as measured with DSC. In a acoustic barrier according to the invention, the second copolymer of the matrix may be up to 30% by weight based on the full layer, preferably up to 25%.

The acoustic barrier according to the invention may further comprise fillers.

Optionally to further increase the density of the acoustic barrier, fillers may be used, whereby the first and optionally second copolymer of the mass matrix are not more than 80% by weight of the full layer.

Preferably, a thermoplastic filler, preferably one that is compatible or of the same material as the matrix may be used.

Preferably fillers are used that consist of a thermoplastic polymer-based powder with a melting temperature above the melting temperature of the matrix, preferably above 200°C, more preferably above 225°C.

By eliminating inert fillers, like calcium carbonate, from the acoustic barrier reuse of the mass material on its own or together with the other layers for recycling into new products as well as thermal recycling becomes a sustainable option.

The filler content of the mass is preferably at least 20% by weight of the layer, preferably at least 40% by weight of the layer, preferably at least 50% by weight of the layer.

The filler may be a thermoplastic powder from a recycled source comprising at least terephthalate-based material, preferably from recycled automotive parts or automotive semifinished material.

The powder filler material preferably comprises not more than 10% of material in fibrous form.

As the filler comprises a melting temperature above the melting temperature of the matrix of the acoustic barrier, the powder will be encapsulated within the mass without affecting the properties of the matrix material. In particularly as thermoplastic material is used for both the mass and the matrix a pairing and hence a better encapsulation is possible leading to an overall better moulding and forming of such a layer even, when it is filled.

Surprisingly the addition of such a thermoplastic powder is also enhancing the processing of the material during heat extrusion and moulding. In particular there is less sticking to surfaces for instance during a calendaring process and or the mould.

The density of the acoustic barrier may vary between 1.2 and 1.4 kg/m³, depending on the density of the filler as well as the materials used.

The area weight of the acoustic barrier is preferably greater than 2 kg/m², preferably between 3 and 8 kg/m², depending on the acoustic requirements of the flooring system within the car. The area weight may vary over the surface of the layer.

The automotive flooring system according to the invention comprises a carpet surface layer, that may be one of a polyester tufted carpet or a polyester needle punch carpet, whereby all materials within the carpet are terephthalate based, preferably polyethylene terephthalate PET, polybutylene terephthalate PBT or polytrimethylene terephthalate PTT based, or a combination of such materials.

For a sustainable automotive flooring system according to the invention it is beneficial that all materials used in the multilayer system are based on the same or similar materials or that these are at least compatible. Preferably the decoupling layer is formed by a felt or fibrous material comprising fibers and a binder, whereby the fibers and the binder are at least 95% by weight of the layer terephthalate-based material, preferably up to 100%. The fibers may be obtained from a recycled resource and may contain a small amount of non-terephthalate-based materials.

Although it is the intention to use terephthalate based materials solely for the automotive flooring system according to the invention, some of the additives used within the layers may not be terephthalate-based, because of the function or nature of the materials needed, for instance a very low level of dyes and pigments may be used in one or more of the layers, like for instance the carpet surface layer and they may be based on carbon black, while also other additives may be necessary, like UV light protection, mould release etc. These non-terephthalate-based materials should remain underneath 5% by weight based on the full part to be able to upcycle or recycle the full material for instance for re-spinning of staple fibers.

### Drawings

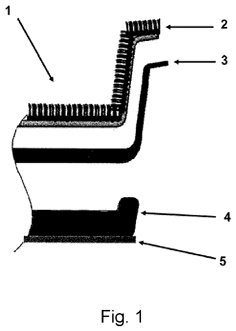

Figure 1 shows an example of a multilayer flooring system 1 according to the invention, with a carpet surface layer 2, a acoustic barrier 3 and a decoupling layer 4. All layers are surface to surface laminated to neighbouring layer or layers. To show the different layers the figure is showed in an exploded view.

The carpet layer may be any type of pile layer used in the art, preferably a tufted carpet layer whereby bulked continuous filament yarn forms tufts that are formed in a primary background, while a secondary backing is applied to the backside to ensure tuft and fiber locking of the tufts. For the automotive flooring system according to the invention all materials within the carpet layer are terephthalate-based for at least 95%. In particular a 100% terephthalate based BCF yarn may be used, preferably based on recycled PET, eventually combined with a low amount of PBT. Preferably not more than 5% PBT, may be included in the BCF yarn. BCF yarn may contain colorants, often carbon black is used. Carbon black is not problematic for respinning of staple fibers or reuse in the matrix material. This may be up to 3% of the overall trim part and may be used intentionally or unintentionally in all layers of an automotive trim part.

Alternatively, a needle punch carpet made from predominantly terephthalate-based fibers may be used for the surface layer, combined with eventually a second fibrous layer being stiffer than the top layer to create a strong surface layer.

The acoustic barrier 3 may be laminated directly against the carpet surface layer, or against a neighbouring layer, for instance an in between layer, like a stiffening layer. The acoustic barrier comprises a matrix and eventually a filler. The acoustic barrier according to the invention is terephthalate-based, and preferably comprising at least one co-polymer.

Preferably a thermoplastic filler is used, preferably based on terephthalate with a melting temperature of at least 200°C, preferably 220°C.

By using a filler that has a melting temperature above those of the matrix it is possible to maintain the filler substantially in discrete particles embedded within the matrix, hence the filler may be any thermoplastic material. However, by using a terephthalate-based material, the filler may increase the overall quality of the acoustic barrier. Hence, if such material is recycled the whole layer or scraps of such a layer will be reduced in size and thermally molten and mixed into a new material that may be used for new products or may be mixed with material to produce a new acoustic barrier matrix. It is therefore important to maintain the terephthalate-based material at a high level to prevent reduction of the overall quality of the waste and the products produced.

The multilayer flooring system according to the invention may further include a spring layer or decoupling layer, comprising fibers and a binder, whereby both are predominantly terephthalate basted.

## Claims

1. Automotive flooring system formed in a 3-dimensional shape comprising at least a carpet surface layer, an acoustic barrier, and a decoupling layer, all layers laminated face to face to adjacent layer or layers, **characterized in that** all components of the flooring comprise of at least 95% terephthalate-based polymers or copolymers by weight of the full part.

2. Automotive flooring system according to one of the preceding claims, whereby the acoustic barrier comprises a matrix and whereby the matrix comprises at least a first copolymer of terephthalate-based material, and whereby the first copolymer is at least 40% by weight of the acoustic barrier, preferably at least 50% by weight of the acoustic barrier.

3. Automotive flooring system according to one of the preceding claims, whereby the first copolymer of the mass matrix has a melting temperature in the range of 140 to 160°C as measured with DSC.

4. Automotive flooring system according to one of the preceding claims, whereby the first copolymer of the mass matrix is a copolyester thermoplastic elastomers (TPEE).

5. Automotive flooring system according to one of the preceding claims, whereby the mass matrix further comprises a second copolymer of terephthalate-based material.

6. Automotive flooring system according to claim 5, whereby the second copolymer of the mass matrix has a melting temperature in the range of 130 to 155°C as measured with DSC.

7. Automotive flooring system according to claim 5 or 6 whereby the second copolymer of the mass matrix is up to 20% by weight based on the full layer,

8. Automotive flooring system according to one of the preceding claims, whereby the first and optionally second copolymer of the mass matrix are not more than 80% by weight of the full layer.

9. Automotive flooring system according to one of the preceding claims, whereby the mass further comprises a filler consisting of a thermoplastic polymer-based powder with a melting temperature above the melting temperature of the matrix, preferably above 200°C, more preferably above 225°C.

10. Automotive flooring system according to one of the preceding claims, whereby the filler content of the mass is at least 20% by weight of the layer, preferably at least 40% by weight of the layer, preferably at least 50% by weight of the layer.

11. Automotive flooring system according to one of the preceding claims, whereby the filler is a thermoplastic powder from a recycled source comprising at least terephthalate-based material, preferably from recycled automotive parts or automotive semifinished material, whereby the material comprises not more than 10% of fibrous material.

12. Acoustic barrier according to one of the previous claims, whereby the density of the layer is between 1.2 and 1.4 kg/m³.

13. Automotive flooring system according to one of the preceding claims, whereby the carpet layer is one of a polyester tufted carpet or a polyester needle punch carpet, whereby all materials within the carpet are terephthalate based, preferably PET, PBT or PTT based or a combination of such materials.

14. Automotive flooring system according to one of the preceding claims, wherein the area weight of the acoustic barrier is between 0.5 and 8 kg/m².

15. Automotive flooring system according to one of the preceding claims whereby the decoupling layer is a nonwoven comprising fibers and a binder, whereby at least 90% by weight of the decoupling layer consist of the fibers and binder that are terephthalate based.
